Europäisches Patentamt

European Patent Office

Office européen des brevets

(11) Publication number: **0 428 521 B1**

## EUROPEAN PATENT SPECIFICATION

(45) Date of publication of patent specification: **23.08.95**  (51) Int. Cl.⁶: **A01N 31/06**

(21) Application number: **89905805.1**

(22) Date of filing: **02.05.89**

(86) International application number:
**PCT/SE89/00248**

(87) International publication number:
**WO 89/10692 (16.11.89 89/27)**

The file contains technical information submitted
after the application was filed and not included in
this specification

(54) **Method for inhibiting the pine shoot beetle.**

(30) Priority: **09.05.88 SE 8801738**

(43) Date of publication of application:
**29.05.91 Bulletin 91/22**

(45) Publication of the grant of the patent:
**23.08.95 Bulletin 95/34**

(84) Designated Contracting States:
**AT BE CH DE FR GB IT LI LU NL SE**

(56) References cited:

**Journal of Chemical Ecology. Vol. 13, No. 5,
1987, B S Lanne et al. "Differences in attrac-
tion to semio-chemicals present in sym-
patric pine shoot needles, Tomicus minor
and T. piniperda", p 1045-1067, see page
1049, 2nd paragraph; page 1052, 2nd and 3rd
paragraph, page 1053, 4th paragraph; page
1055, Fig. 20; page 1057, Fig 3; page 1062,
last paragraph, page 1063 line 2**

(73) Proprietor: **LÖFOUIST, Jan
Murarvägen 18
S-222 30 Lund (SE)**

Proprietor: **BYERS, John
125 Everett Street
Lakewood, CO 80226 (US)**

Proprietor: **LANNE, Boel
Ragkornsgatan 88
S-431 40 Mölndal (SE)**

Proprietor: **SCHLYTER, Fredrik
Ö. Vallgatan 2A
S-223 61 Lund (SE)**

(72) Inventor: **LÖFOUIST, Jan
Murarvägen 18
S-222 30 Lund (SE)**

Rank Xerox (UK) Business Services
(3. 10/3.0 9/3.3.3)

Scand J. For. Vol. 2, 1987, A Bakke, "Repression of Ips typographus Infestations in Stored Logs by Semiochemicals", p 179-185, see page 183, 1st paragraph after table 3

H J Bestmann and O Vostrowsky, Band 6, 1981, R Wegler, "Chemie der Pflanzenschutz- und Schädlingsbekämpfungsmittel", see pages 48-50

Inventor: **BYERS, John**
**125 Everett Street**
**Lakewood, CO 80226 (US)**
Inventor: **LANNE, Boel**
**Ragkornsgatan 88**
**S-431 40 Mölndal (SE)**
Inventor: **SCHLYTER, Fredrik**
**Ö. Vallgatan 2A**
**S-223 61 Lund (SE)**

(74) Representative: **Inger, Lars Ulf Bosson**
**L + U INGER Patentbyra HB**
**Garvaregatan 12**
**S-262 00 Ängelholm (SE)**

**Description**

Technical field

The present invention relates to a method for inhibiting the larger and smaller pine shoot beetle, Tomicus piniperda, and Tomicus minor, respectively, as well as a composition hereto.

The object of the present invention is to obtain a possibility to inhibit infestation of the larger and smaller pine shoot beetle in pine.

A further object is to obtain a composition hereto.

Background of the invention

The interest for biological methods for inhibiting pest insects has steadily increased during the last decade. This is particularly due for pheromones, the species specific signal substances which some animals, and then in particular insects, communicate with, inter alia to find a partner prior to mating. Pheromone based inhibiting methods against pest insects are characterized in that 1) they are highly species specific, 2) the chemical compounds used are relatively simple, and biologically active in very small amounts to the target organism, often nanogram amounts, and 3) the insects have great difficulty in developing resistance against these natural signal compounds.

The high species specificity of the pheromones means that pheromone based inhibiting agents are directed almost only against individuals of one single species. Sometimes, furthermore, against closely related species. The chemical composition of the pheromones is as a rule of such a type that they will quite easily decompose by UV-light and micro-organisms after an application. Then they are decomposed to compounds which are completely harmless to other organisms. This is natural as the pheromones as behaviour signal shall be short living. They are thus not accumulated in higher organisms in a nutritional chain. The development of resistance in the insects against species specific pheromones is extremely improbable. In spite of a considerable use of pheromones in the inhibition of e.g. a cotton fly in California for a whole decade, no resistance has developed. No change whatsoever in the composition of the pheromone has been demonstrated.

For the reason given above pheromone-based inhibiting methods against pest insects are particularly harmless to the environment. Furthermore, they have proved to be extremely efficient.

Inhibition of forest damaging insects is an area where pheromone based inhibiting methods already are of great importance as great economical values are at stake hereby. These is particularly due for bark beetles which every years cause great losses both in form of killed trees, growth losses and numerous damages of e.g. blueing fungus.

The larger and smaller pine shoot beetles, Tomicus piniperda, and Tomicus minor attack pines, Pinus sylvestris. As most borer beetles the larger pine shoot beetle multiply in the nutritional phloem between the outer bark and the wood while the smaller pine shoot beetle lives on blueing fungus. The females initiate an attack and are then rapidly followed by the males. Byers et al (1985) showed that T. piniperda is strongly attracted by a mixture of monoterpenes consisting of the two enantiomers of a-pinene, and the (+)-3-carene and terpinolene, which are characteristic components of the pine resin. Wind broken, top broken or in any other way damaged trees are colonized by the pine shoot beetles. Healthy trees are however, seldom attacked. The pine shoot beetles orient apparently by means of the resin compounds released from the fracture surface from broken branches, roots, tops or other bark damages and which thereby indicates a weakened tree. Early in spring-time when the temperature raises above 12°C the pine shoot beetles aggregate in large numbers on damaged pines, particularly on wind-fallen trees and stores of trees being cut during the winter. This has caused a regulation of the extract from the forest of cut trees, which, when pine is concerned, shall have been ended prior to July 1. This means a transport problem which, during certain years can be particularly troublesome.

The pine shoot beetles gnaw paths in the phloeme under the outer bark and lay their eggs in these. The larvae live off the nutritionally rich phloem (T. piniperda) or of hyfes of blueing fungus (T. minor) and after the pupal stage the new generation of pine shoot beetles is born in July. The leave the log and fly up to healthy crowns of pine where they gnaw into the new shoots and live of the marrow in these during the summer. During autumn they relocalize down to the layer of forest litter (T. minor) or bore themselves into the thick outer bark at the base of the pines (T. piniperda), where they hibernate.

Those shoots as the pine shoot beetles have lived in and of during the late summer blow off during the autumn and winter which, at more massive attacks can cause considerable growth losses of the pines. The blueing fungus causes a technical damage on the wood by discolouring, which leads to a lower price.

Even if pine shoot beetles usually multiply in weakened trees these respond to these borings by a rich resin flow, which can drown those arriving first. Pine shoot beetles thus usually use an aggregation pheromone by means of which the pine shoot beetles first arrived attracts a lot of animals. The resin flow becomes then at such a massive attack supportable to one and each of them.

In an attempt to isolate the aggregation pheromone from the larger pine shoot beetle Byers et al (1985) combined chemical fractionation made by preparative gas chromatography with a behaviour test in which the attraction of the pine shoot beetles was studied. No indication of such a pheromone could be discovered neither in these tests nor in field trials with attraction to infested wood. The larger pine shoot beetle thus uses as signal substance for attraction only monoterpenes from resin of the pine, particularly the above mentioned.

J. Chem. Ecol. (1976), vol 2, no. 2, pp195-199 discloses that verbenone and 3-methyl-2-cyclohexen-1-one nullifies the attractive properties of various substances to certain Dendroctonus species. Further it is disclosed that verbenone is known as an important substance in the rivalry between males of Dendoctronus frontalis.

Semiochemicals, Their Role in Pest Control, (1981), pp. 186, 199-200 discloses that verbenone is excreted by D. frontalis primarily to attract, and when excreted in larger amounts to inhibit aggregation thereof.

Scand. J. For. Res. 2, (1987), pp 179-185 discloses that verbenone and ipsenol reduces aggregation to spruce wood by Ips typographus. I. typographus belongs to quite another genus than T. minor and T. piniperda, and they do not even attack the same tree species.

Description of the present invention

It has now surprisingly been shown possible to be able to prevent attack on cut pine by applying an inhibiting amount of verbenone on such wood, preferably in a combination with an inert carrier.

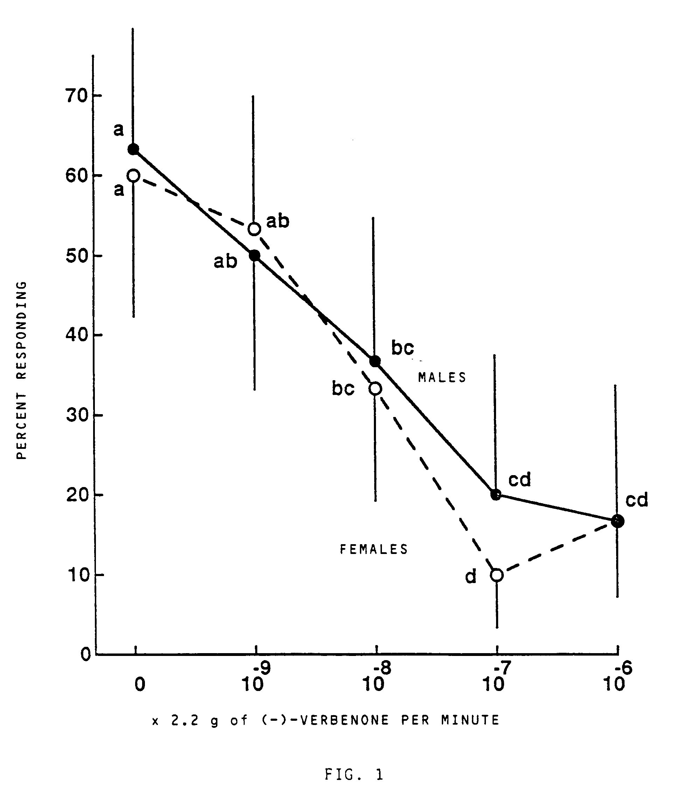

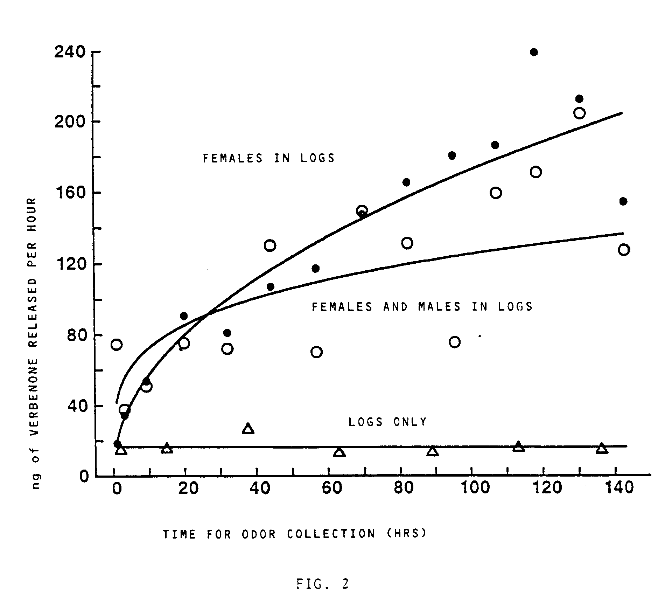

Just as important as it is that the pine shoot beetles can orient their flying to a certain tree in the initial stage, just as important is it of course that they cease to aggregate on the tree when this becomes filled. In other cases many larvae will die of lack of nutrients. It has now turned out that (-)-verbenone which together with several other compounds is produced, when pine shoot beetles of both sexes gnaw the paths underneath the bark (Lanne et al, 1987) inhibits the reaction of pine shoot beetles of both sexes to an attractant consisting of the above mentioned three monoterpenes (FIG. 1). The behaviour test as such, has previously been described more carefully by Byers et al (1985) and Lanne et al (1987). Both ( + ) and (-)-enantiomeres of verbenone reduces the attraction of the pine shoot beetles to baits consisting of the three monoterpenes (Table 1). It has also been determined the naturally released amount of verbenone during a week time from pine shoot beetles bored into a log (FIG. 2) and it has been found that the amounts correspond to those which in a laboratory (FIG. 1) and field (Table 1) test lead to an inhibition. Verbenone is thus already in these small amounts a very effective inhibitor preventing pine shoot beetles to attract to baits simulating the attraction ability of damaged pines.

TABLE 1

Attraction of <u>Tomicus</u> <u>piniperda</u> to tube traps loaded with attracting, synthetic monoterpenes and inhibitory amounts of enantiomeres of verbenone (V). The traps were placed in a pine forest.

Total catch of the tube traps

| Chemicals released[a] | Males | Females |
|---|---|---|
| May 14-20 | | |
| Control | 0 | 0 |
| Monoterpenes[b,c] | 30[d] | 29[d] |
| Monoterpenes + (+)-V[c] | 9 | 3 |
| Monoterpenes + (-)-V | 0 | 3 |
| April 17-29 | | |
| Control | 1 | 0 |
| Monoterpenes | 83[d] | 65[d] |
| Monoterpenes + (+)-V | 35 | 16 |
| Monoterpenes + (-)-V | 19 | 19 |

a  The compounds were released in a constant amount (alfa-pinene 14 mg/day, 3-carene 6 mg/day, terpinolene 2.5 mg/day) each from glass tubes melted together in one end (2 x 0.07 cm) and containing 0.05 ml of compound in pure form.

b  (+) and (-) alfa-pinene, (+)-3-carene and terpinolene

c  The release of verbenone was in all tests 0.25 mg/day (about 174 ng/min)

d  According to the Wilcoxon test the monoterpenes loaded traps catch significantly more pine shoot beetles than the control traps or similar traps which all released verbenone ($p < 0.05$).

The effect of verbenone to protect cut wood against attack of pine shoot beetles was studied in a field trial in which racemic verbenone in pure form was applied by spraying directly onto 1.5 m long pine logs in a dosage of 15 ml/log. The result is evident from Table 2.

TABLE 2

Direct application of verbenone. 8 replicates (groups of logs) with two logs in each group (one treated and one untreated).

| Treatment | Attacks/log Mean value | Total number of attacks | Inhibition effect |
|---|---|---|---|
| Verbenone | 8 | 61 | 79% |
| Control | 37 | 295 | |

It has thus been shown that either one of or both enantiomers together of verbenone can be used to prevent the both sexes of T. piniperda and T. minor to colonize cut pine log. As the pine shoot beetles have difficulty in colonizing living trees, which defend themselves with a rich resin flow they will tire themselves out in fruitless attempts to find a suitable spawning place or they will die in the resin when they try to attack a healthy pine.

At the use of verbenone in this aim verbenone is applied in an absorbent, such as silica, zeolites, or porous polymers, such as of polyethylene, polycarbamide, or dextrose derivatives, or be dispersed in an emulsion of a cellulose derivative, such as CMC, hydroxymethyl cellulose, other starch glues or gum forming polysaccharides, so that the compound is released with an even amount for a long time. The absorbent is sprayed over the store of wood in the forest. As the wood does not become attacked the transport out of the forest can be spread during a longer time period and can be made during the autumn. In the same way, summer cutting can take place which means a more rational handling within forestry.

FIG. 1    shows the importance of increasing amounts of (-)-verbenone on the attraction response in a behaviour test carried out as a laboratory test using males and females of T. piniperda to a 1:1:1:1 mixture of the resin monoterpenes (-)-a-pinene, (+)-a-pinene, (+)-3-carene, and terpinolene, each being released in an amount of $2.2 \times 10^{-6}$ g/min. Points (N = 30) marked with the same letter are not significantly separated (a = 0.05 $X^2$). Vertical lines denotes the upper and lower 95 percent confidence interval.

FIG. 2    Release of verbenone from pine logs with 1.) 50 females (filled circles), 2.) 50 females and 50 males (unfilled circles) of T. piniperda and 3.) only 50 artificially bored (triangles). The quantification was carried out using gas chromatography/mass spectrometry using Z7-tridecanyl acetate (500 ng) as internal standard.

**Claims**

1.    Method for inhibiting the larger and/or smaller pine shoot beetles, Tomicus piniperda, and Tomicus minor, respectively, by preventing aggregation and/or colonization of pine, **characterized** in that one applies an inhibitory active amount of (+) and/or (-)-verbenone on cut pine wood, thereby providing a release of at least $2.5 \times 10^{-9}$ g of verbenone per minute.

2.    Method according to claim 1, **characterized** in that one adds so much of verbenone that one obtains a release of at least $2.5 \times 10^{-8}$ g of verbenone per minute.

3.    Method according to claim 1, **characterized** in that one obtains a release of at least $2.5 \times 10^{-7}$ to $2.5 \times 10^{-6}$ g of verbenone per minute.

4.    Composition for inhibiting T. piniperda and/or T. minor on pine and/or cut pine wood according to claims 1 to 3, **characterized** in that it consists of (+) and/or (-) verbenone as an active component together with an absorbent and/or a film forming cellulose derivative.

5. Composition according to claim 4, **characterized** in that it consists of a silicon based absorbent and ( + ) and/or (-) verbenone.

6. Composition according to claim 4, **characterized** in that it consists of a cellulose derivative and ( + ) and/or (-) verbenone.

7. Composition according to claim 4, **characterized** in that it consists of a porous polymer and ( + ) and/or (-) verbenone.

**Patentansprüche**

1. Verfahren zur Abwehr der größeren und/oder kleineren Borkenkäfer, Tomicus piniperda bzw. Tomicus minor, durch Verhinderung einer Ansammlung auf und/oder Besiedlung von Nadelbäumen, **dadurch gekennzeichnet**, daß man eine abwehraktive Menge von ( + )- und/oder (-)-Verbenon auf geschnittenem Nadelholz aufbringt und dabei eine Freisetzung von wenigstens $2,5 \times 10^{-9}$ g Verbenon je Minute bewirkt.

2. Verfahren nach Anspruch 1, **dadurch gekennzeichnet**, daß man so viel Verbenon zugibt, daß man eine Freisetzung von wenigstens $2,5 \times 10^{-8}$ g Verbenon je Minute erhält.

3. Verfahren nach Anspruch 1, **dadurch gekennzeichnet**, daß man eine Freisetzung von wenigstens $2,5 \times 10^{-7}$ bis $1,5 \times 10^{-6}$ g Verbenon je Minute erhält.

4. Zusammensetzung zur Abwehr von T. piniperda und/oder T. minor auf Nadelbäumen und/oder geschnittenem Nadelholz nach Anspruch 1 bis 3, **dadurch gekennzeichnet**, daß sie aus ( + )- und/oder (-)-Verbenon als eine aktive Komponente zusammen mit einem Absorbens und/oder einem filmbildenden Zellulosederivat besteht.

5. Zusammensetzung nach Anspruch 4, **dadurch gekennzeichnet**, daß sie aus einem Absorbens auf Siliciumbasis und ( + )- und/oder (-)-Verbenon besteht.

6. Zusammensetzung nach Anspruch 4, **dadurch gekennzeichnet**, daß sie aus einem Zellulosederivat und ( + )- und/oder (-)-Verbenon besteht.

7. Zusammensetzung nach Anspruch 4, **dadurch gekennzeichnet**, daß sie aus einem porösen Polymer und ( + )- und/oder (-)-Verbenon besteht.

**Revendications**

1. Procédé d'inhibition des grands et/ou petits coléoptères des pousses du pin, respectivement Tomicus piniperda et Tomicus minor, en empêchant une agrégation et/ou une colonisation sur le pin, caractérisé en ce qu'on applique une quantité active inhibitrice de ( + ) et/ou (-)-verbénone sur du bois de pin coupé, en conférant ainsi une libération d'au moins $2,5 \times 10^{-9}$ g de verbénone par minute.

2. Procédé suivant la revendication 1, caractérisé en ce qu'on ajoute une quantité telle de verbénone qu'on obtient une libération d'au moins $2,5 \times 10^{-8}$ g de verbénone par minute.

3. Procédé suivant la revendication 1, caractérisé en ce qu'on obtient une libération d'au moins $2,5 \times 10^{-7}$ à $2,5 \times 10^{-6}$ g de verbénone par minute.

4. Composition pour inhiber le T. piniperda et/ou le T. minor sur du pin et/ou du bois de pin coupé suivant l'une quelconque des revendications 1 à 3, caractérisée en ce qu'elle comprend de la ( + ) et/ou (-)-verbénone comme composant actif avec un absorbant et/ou un dérivé cellulosique filmogène.

5. Composition suivant la revendication 4, caractérisé en ce qu'elle comprend un absorbant à base de silicium et de la ( + ) et/ou (-)-verbénone.

6.  Composition suivant la revendication 4, caractérisée en ce qu'elle comprend un dérivé cellulosique et de la ( + ) et/ou (-)-verbénone.

7.  Composition suivant la revendication 4, caractérisée en ce qu'elle comprend un polymère poreux et de la ( + ) et/ou (-)-verbénone.

FIG. 1

FIG. 2